# FASCICULE DE BREVET EUROPEEN

(11) **EP 2 748 936 B1**
(45) Date de publication et mention de la délivrance du brevet: **24.02.2016**
(21) Numéro de dépôt: 12758573.5
(22) Date de dépôt: 21.08.2012
(51) Int. Cl.: H04B 3/54

(54) **PROCEDE DE COMMUNICATION A DES FINS DE CONFIGURATION ET/OU D'INTERROGATION ET SYSTEME LE METTANT EN OEUVRE**
KOMMUNIKATIONSVERFAHREN FÜR KONFIGURATIONS- UND/ODER ABFRAGEZWECKE UND SYSTEM ZUR ANWENDUNG DIESES VERFAHRENS
COMMUNICATION METHOD FOR THE PURPOSE OF CONFIGURATION AND/OR INTERROGATION, AND SYSTEM USING SAME

(30) Priorité: 23.08.2011 FR 1157470
(43) Date de publication de la demande: 02.07.2014
(73) Titulaire: Senstronic (Société Par Actions Simplifiée), 67700 Saverne (FR)
(72) Inventeur: FRANC, Joël, F-67201 Eckbolsheim (FR); KIRCHDOERFFER, Rémy, CH-1117 Grancy (CH)
(74) Mandataire: Nuss, Laurent
(86) Numéro de dépôt international: PCT/FR2012/051914
(87) Numéro de publication internationale: WO 2013/026986

(56) Documents cités:
- EP-A1- 0 370 921
- WO-A1-01/54298

## Description

La présente invention concerne le domaine de la communication et de la transmission de données, plus particulièrement dans le cadre de la communication entre un dispositif de configuration, d'interrogation et/ou de diagnostic et un produit dit "intelligent", tel qu'un ensemble capteur, détecteur, actionneur ou un produit fonctionnel analogue, intégrant au moins une unité de traitement.

Elle a pour objet un procédé de communication entre un tel dispositif et un tel produit, ainsi qu'un système mettant en oeuvre ce procédé.

Les produits visés dans la présente invention sont généralement installés à demeure, après leur mise en service, au niveau de sites particuliers qui leur sont réservés (sites industriels, sites publics, sites privés).

Dans leur fonctionnement courant, ces produits sont reliés de manière comme à un ou des système(s) distant(s) assurant leur alimentation énergique et évaluant et/ou exploitant les signaux de mesure (logiques ou analogiques) qu'ils délivrent en sortie. L'alimentation peut également en variante être fournie directement par le réseau externe ou un réseau locale adapté.

Le type de communication et de transmission visé plus particulièrement dans la présente demande est une communication temporaire établie entre un tel produit et un dispositif du type précité durant des phases particulières de la vie du produit, à savoir, par exemple, des phases de configuration, de calibration, de paramétrage, d'interrogation, de test ou de diagnostic, chacune de ces phases pouvant éventuellement être répétée à plusieurs reprises, voire à intervalles réguliers.

Durant ces phases de communication spécifiques et temporaires, le dispositif est généralement maître et le produit esclave.

Même lorsqu'un produit du type précité ne dispose pas d'une interface utilisateur (afficheur, clavier,.), il est souvent utile qu'il puisse néanmoins disposer d'un mode de communication, lors de sa fabrication et/ou de son installation (diagnostic et/ou calibration) et/ou au cours de son utilisation (configuration, interrogation,.), par l'intermédiaire d'un moyen approprié.

Cette possibilité permet dès lors de configurer tout ou partie des caractéristiques fonctionnelles du produit ou encore de pouvoir l'interroger, pour récupérer tout type d'informations qui y seraient stockées (informations acquises durant les périodes de fonctionnement courant et autonome par rapport au dispositif précité du produit).

Actuellement, dans ce cas, un moyen de communication filaire spécifique (généralement matérialisé par un connecteur dédié à la communication) ou un moyen de communication sans fil (Optique, Radio, RFID, couplage magnétique,.) est nécessaire au produit pour lui permettre de communiquer, avec l'utilisateur, via un dispositif externe.

De telles solutions nécessitant une liaison ou un raccordement dédié(e) sont notamment connues des documents suivants : US-A-2010/0315257, US-A-2010/0268496, US-A-2010/0250911, EP-A-1 278 077, EP-A-1 538 458 et EP-A-1 600 736.

Par le document WO-A-01/54298, on connaît, en outre, un système de communication comprenant une station locale alimentée en énergie de l'extérieur et au moins une station distante.

La station distante est reliée en permanence à la station locale par une liaison bifilaire pour l'alimentation en énergie et la transmission bidirectionnelle de données. Un dispositif spécifique pour la communication bifilaire en retour (distante → locale) doit, par conséquent, être prévu au niveau de la station distante et cette dernière ne peut pas fonctionner de manière indépendante ou autonome (par rapport à la station locale).

Par le document EP-A-0 370 921, on connaît un système similaire comprenant une unité centrale reliée à des modules par une liaison bifilaire pour l'alimentation et l'échange de données.

La présente invention a pour but de fournir une solution de communication temporaire pour des produits dits "intelligents", comportant au moins une ligne d'alimentation et fonctionnant en temps normal de manière indépendante, voire autonome, solution qui ne devrait pas nécessiter de moyens de liaison de communication spécifiques ou dédiés (filaires ou sans fil) et n'entraîner au plus qu'une modification minime au niveau du produit.

A cet effet, l'invention a pour objet un procédé de communication entre un dispositif de configuration, d'interrogation et/ou de diagnostic qui est maître durant la durée de la communication et un produit du type actionneur, pré-actionneur, capteur ou détecteur qui est esclave durant la durée de la communication,
ledit produit esclave comportant au moins une unité de traitement et une ligne ou entrée d'alimentation à courant continu, ainsi qu'au moins une ligne de sortie et/ou interface de sortie, ledit produit esclave étant indépendant du dispositif maître en fonctionnement courant et relié au dispositif maître en vue d'une configuration, d'une calibration, d'un paramétrage, d'une interrogation ou encore d'un test ou d'un diagnostic,
procédé caractérisé en ce qu'il consiste à transmettre au produit des données interprétables par son unité de traitement par l'intermédiaire de la ligne d'alimentation, en réalisant une modulation de la tension d'alimentation, et à transmettre éventuellement des données en retour du produit vers le dispositif par l'intermédiaire de la ligne de sortie ou interface de sortie reliée audit dispositif.

L'invention a également pour objet un système pour la mise en oeuvre du procédé précité, comprenant un dispositif de configuration et/ou d'interrogation et au moins un produit configurable et/ou interrogeable, respectivement maître et esclave durant la communication
le ou chaque produit consistant en un produit intelligent choisi dans le groupe formé par les actionneurs, les pré-actionneurs, les capteurs et les détecteurs intelligents et étant apte à être relié audit dispositif par l'intermédiaire de sa ligne d'alimentation à courant continu, ainsi que, le cas échéant, par sa ligne ou son interface de sortie,
ledit au moins un produit comprenant au moins une unité de traitement, et préférentiellement au moins un autre élément ou composant fonctionnels, système caractérisé en ce que le dispositif et le ou chaque produit comprennent des moyens respectifs, fonctionnellement complémentaires, pour la transmission du dispositif vers le ou chaque produit de données interprétables par l'unité de traitement concernée, ladite transmission s'effectuant par l'intermédiaire de la ligne d'alimentation et par le biais d'une modulation de la tension d'alimentation et en ce que le ou chaque produit intègre un étage ou une interface de sortie relié(e) à une interface ou à un étage d'entrée du dispositif, autorisant une transmission filaire de données du ou des produits vers le dispositif, sous forme de signaux binaires ou analogiques.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1 et 2 sont des représentations synoptiques d'un dispositif maître faisant partie d'un système pour la mise en oeuvre du procédé selon l'invention, en accord avec deux modes de réalisation ;
la figure 3 est une représentation synoptique d'un produit esclave faisant partie du système pour la mise en oeuvre du procédé selon l'invention ;
les figures 4A et 4B sont des chronogrammes illustrant, à titres d'exemples, respectivement les signaux transmis vers le produit (depuis le dispositif) par la ligne d'alimentation (figure 4A) et les signaux transmis vers le dispositif (depuis le produit connecté) par la ligne et/ou l'interface de sortie (figure 4B) ;
la figure 5 est un logigramme illustrant les étapes d'un exemple de procédure suivi par le dispositif des figures 1 et 2 pour la transmission de données du dispositif vers le produit par la ligne d'alimentation ;
la figure 6 est un logigramme illustrant les étapes d'un exemple de procédure suivi par le produit de la figure 3 lors de la réception de données via la ligne d'alimentation, et,
les figures 7A et 7B illustrent schématiquement les configurations de branchement respectivement, d'une part, entre le produit et un système d'alimentation et d'évaluation (en fonctionnement courant) et, d'autre part, entre le dispositif de configuration et d'interrogation et le produit (durant les phases de communication selon l'invention).

L'invention concerne, de manière générale, un procédé de communication entre un dispositif 1 de configuration, d'interrogation et/ou de diagnostic qui est maître durant la durée de la communication et un produit 3 du type actionneur, pré-actionneur, capteur ou détecteur qui est esclave durant la durée de la communication.

Ledit produit esclave 2 comporte au moins une unité 3 de traitement et une ligne ou entrée 4 d'alimentation à courant continu, ainsi qu'au moins une ligne de sortie et/ou interface de sortie 5, ledit produit esclave 2 étant indépendant du dispositif maître 1 en fonctionnement courant et relié au dispositif maître en vue d'une configuration, d'une calibration, d'un paramétrage, d'une interrogation ou encore d'un test ou d'un diagnostic.

Comme indiqué précédemment, l'invention a pour but de fournir une solution de paramétrage et de communication filaire, dans des conditions temporaires spécifiques, pour tout type de produits 2 disposant d'origine à la fois d'une ligne d'alimentation externe 4 à courant continu (bifilaire), d'une ligne ou interface de sortie 5 et dune unité 3 de traitement de l'information (MCU, ASIC, ASSP,.), sans pour cela faire appel à des lignes de données spécifiques ou a un connecteur dédié.

A cet effet, le procédé de communication visé par l'invention consiste à transmettre au produit 2 des données interprétables par son unité de traitement 3 par l'intermédiaire de la ligne d'alimentation 4, en réalisant une modulation de la tension d'alimentation, et à transmettre éventuellement des données en retour du produit 2 vers le dispositif 1 par l'intermédiaire de la ligne de sortie ou interface de sortie 5 reliée audit dispositif 1.

L'homme du métier comprend que la liaison de communication, et simultanément d'alimentation, entre le produit 2 et le dispositif 1 est une liaison temporaire, établie dans des phases opératoires particulières de la vie "active" du produit 2.

Ces phases opératoires peuvent, en fonction du type de produit, de ses capacités, de son utilisation courante et des protocoles particuliers liés à l'application, comprendre des opérations en vue d'une configuration, d'une calibration, d'un paramétrage, d'une interrogation ou encore d'un test ou d'un diagnostic.

Ces opérations qui entraînent une connexion temporaire avec le dispositif 1 (et donc le débranchement de sa connexion fonctionnelle normale) peuvent, en fonction de leur nature, être réalisées avant, durant ou après la mise en oeuvre courante du produit 2 concerné, c'est-à-dire son utilisation normale en fonctionnement (durant laquelle il remplit le rôle pour lequel il a été conçu, tel que par exemple, la détection, la mesure, l'actionnement,.. en étant alimenté et relié en sortie à des moyens différents du dispositif 1).

Préférentiellement, les données sont transmises, lors des phases de liaison communicante entre 1 et 2, sous forme sérielle asynchrone et la modulation de la tension est réalisée dans une plage de valeurs déterminée, compatible avec une alimentation satisfaisante du produit 2.

Les données et informations transmises au produit 2 peuvent être de différentes natures, en relation notamment avec le contexte et les circonstances de la communication.

Ainsi, les données transmises par la ligne d'alimentation 4 peuvent consister en un message de configuration ou de paramétrage d'au moins une fonction et/ou d'au moins un élément fonctionnel 6 du produit 2.

Toutefois, les données transmises par la ligne d'alimentation 4 peuvent aussi consister en un message d'interrogation, entraînant une transmission de données en retour du produit 2 vers le dispositif 1 par l'intermédiaire de la ligne de sortie ou interface de sortie 5 reliée audit dispositif 1, lesdites données transmises en retour étant, le cas échéant, des données stockées au niveau de l'unité de traitement 3 ou d'un circuit de stockage annexe de ce dernier et/ou résultant d'opérations effectuées par l'unité de traitement 3 par un ou plusieurs autre(s) élément(s) fonctionnel(s) 6 du produit, sous le contrôle de cette dernière.

Enfin, les données transmises par la ligne d'alimentation 4 peuvent également consister en un message de demande de test ou de diagnostic, entraînant une transmission de données en retour du produit 2 vers le dispositif 1 par l'intermédiaire de la ligne de sortie ou interface de sortie 5 reliée audit dispositif 1, lesdites données transmises en retour étant, le cas échéant, des données stockées au niveau de l'unité de traitement 3 ou d'un circuit de stockage annexe de ce dernier et/ou résultant d'opérations effectuées par l'unité de traitement 3 par un ou plusieurs autre(s) élément(s) fonctionnel(s) 6 du produit, sous le contrôle de cette dernière.

En vue de l'acquisition des données émises par le dispositif 1, il peut être avantageusement prévu de réaliser une scrutation de la tension d'alimentation, le cas échéant après écoulement d'une durée déterminée initiale de stabilisation, par l'intermédiaire d'un comparateur de tension 7 ou d'un transistor polarisé apte à convertir le niveau de la tension d'alimentation en signal binaire et à le transmettre à l'unité de traitement 3.

Par ailleurs, afin d'éviter la prise en compte au niveau du produit 2 de données non authentifiées, transmises et réceptionnées accidentellement ou volontairement, le procédé de communication peut mettre en oeuvre un protocole de communication sécurisé, mettant en oeuvre un codage des données et/ou des messages transmis et/ou validant une transmission autorisée après réception d'un message de demande d'entrée ou de début de communication par le produit 2 caractéristique, éventuellement codé, et, le cas échéant, jusqu'à réception d'un message d'arrêt ou de fin de communication par ce produit 2.

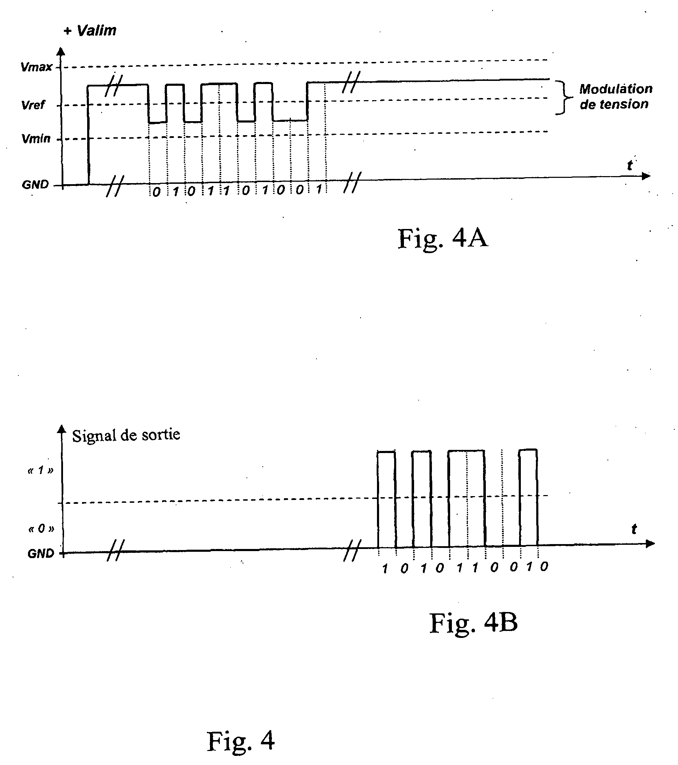

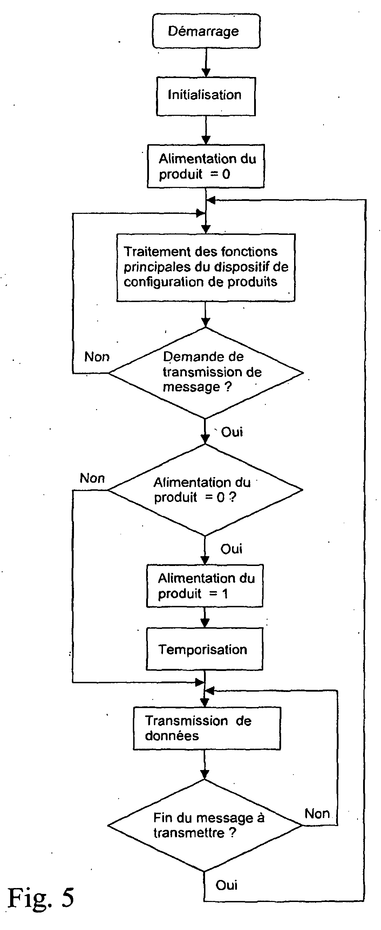

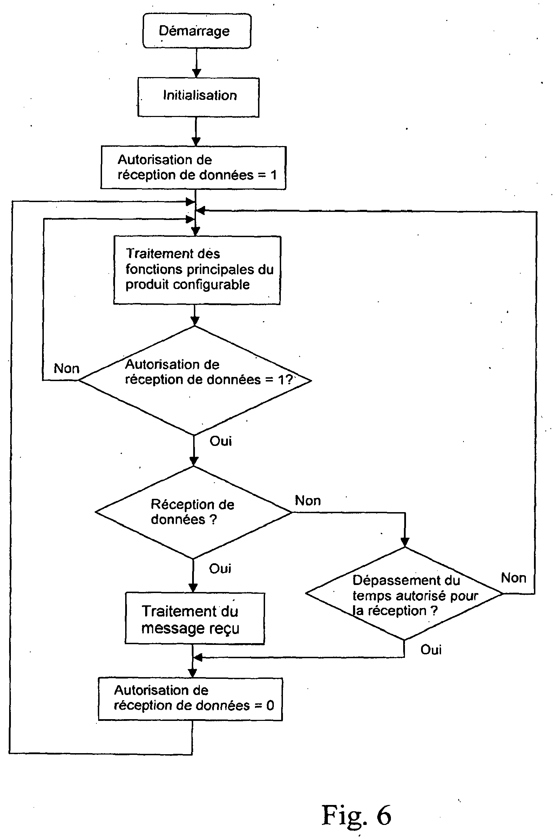

Des exemples possibles d'étapes de procédure consécutives exécutées au niveau du dispositif 1 et du produit 2 sont illustrés aux figures 5 et 6 annexées, dont les informations sont suffisantes pour l'homme du métier. La figure 4A illustre un exemple de modulation binaire de la tension d'alimentation + Valim (émission de données du dispositif 1 vers le produit 2) et la figure 4B illustre un possible type de signal de sortie binaire (tension ou courant) pour l'émission de données du produit 2 vers le dispositif 1.

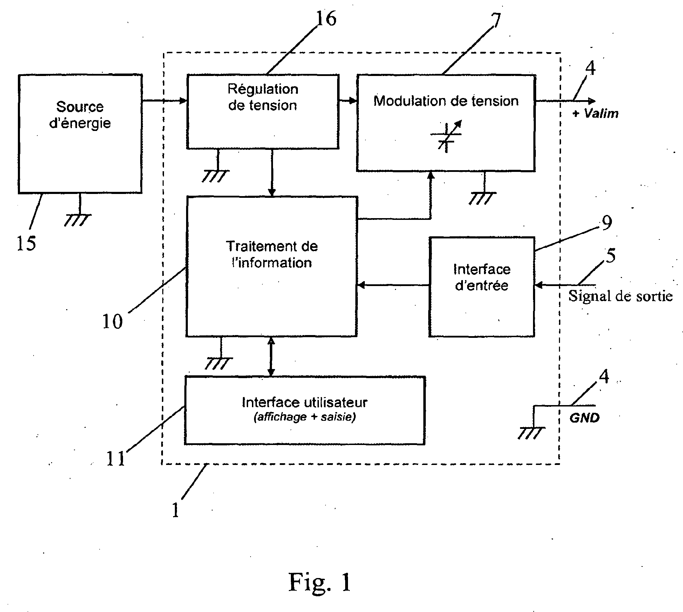

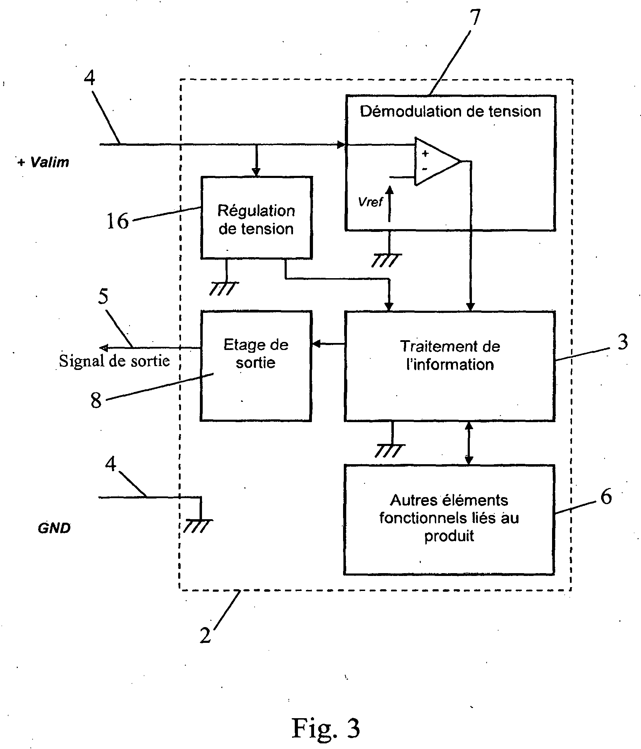

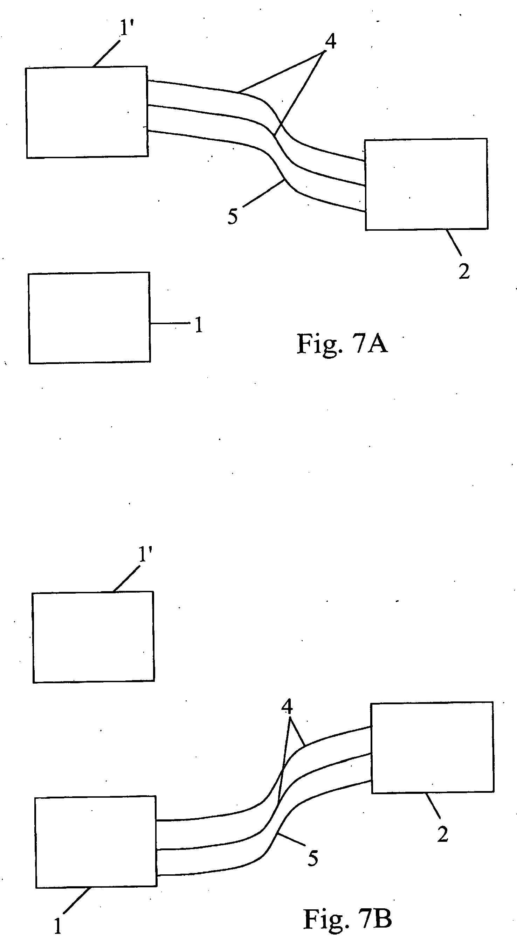

Comme le montrent schématiquement les figures 7A et 7B, en relation avec les figures 1 à 6, l'invention porte également, de manière plus globale, sur un procédé de fonctionnement d'un produit 2 intelligent du type actionneur, pré-actionneur, capteur ou détecteur relié, en fonctionnement courant dans son application usuelle, à au moins un système 1' d'alimentation et d'évaluation, par une ligne ou entrée d'alimentation 4 et par une ligne ou interface de sortie 5.

Ce procédé est caractérisé en ce qu'il consiste, durant des phases temporaires spécifiques de configuration, de calibration, de d'interrogation, de test, de diagnostic ou analogue, à connecter ledit produit 2 à un dispositif 1 de configuration, d'interrogation et/ou de diagnostic par sa ligne ou entrée d'alimentation 4 et par sa ligne ou interface de sortie 5, éventuellement après avoir déconnecté ledit produit 2 du système 1' précité, et à mettre en oeuvre le procédé de communication tel que décrit précédemment.

Comme le montrent les figures 7A et 7B, le dispositif 1 et le système 1' sont généralement physiquement distincts, le dispositif 1 étant éventuellement un dispositif nomade, aisément transportable et pouvant être aisément installé temporairement sur le site d'implantation du produit 2 concerné ou à proximité du système 1'.

L'invention a également pour objet, comme cela ressort au moins partiellement des figures 1 à 3, un système pour la mise en oeuvre du procédé de communication, unidirectionnel ou bidirectionnel, décrit précédemment.

Ce système comprend un dispositif 1 de configuration et/ou d'interrogation et au moins un produit 2 configurable et/ou interrogeable, respectivement maître et esclave durant la communication temporaire entre eux.

Le ou chaque produit 2 consiste en un produit intelligent choisi dans le groupe formé par les actionneurs, les pré-actionneurs, les capteurs et les détecteurs intelligents et est apte à être relié audit dispositif 1 par l'intermédiaire de sa ligne d'alimentation 4 à courant continu, ainsi que, le cas échéant, par sa ligne ou son interface de sortie 5.

Ledit au moins un produit 2 comprend au moins une unité 3 de traitement, et préférentiellement au moins un autre élément ou composant fonctionnel 6 (apte à remplir la fonction primaire notamment dudit produit 2).

Ce système est caractérisé en ce que le dispositif 1 et le ou chaque produit 2 comprennent des moyens respectifs 7, 7', fonctionnellement complémentaires, pour la transmission du dispositif 1 vers le ou chaque produit 2 de données interprétables par l'unité de traitement 3 concernée, ladite transmission s'effectuant par l'intermédiaire de la ligne d'alimentation 4 et par le biais d'une modulation de la tension d'alimentation et en ce que le ou chaque produit 2 intègre un étage ou une interface de sortie 8 relié(e) à une interface ou à un étage d'entrée 9 du dispositif 1, autorisant une transmission filaire de données du ou des produits 2 vers le dispositif 1, sous forme de signaux binaires ou analogiques.

L'homme du métier comprend aisément que le dispositif 1 peut être relié à un seul ou à plusieurs produit(s) 2, en fonction de sa construction et de ses circonstances d'utilisation.

Avantageusement, le dispositif 1 comporte un composant ou circuit 7' de modulation de la tension, dans une plage de valeurs déterminée, compatible avec une alimentation satisfaisante du ou des produits 2 connecté(s), et le ou chaque produit 2 comporte un circuit ou composant 7 de démodulation de tension, tel que par exemple un comparateur de tension, dont la sortie est reliée à l'unité de traitement 3 du produit 2 concerné, la transmission de données s'effectuant sous forme sérielle asynchrone, le cas échéant avec mise en oeuvre d'un protocole de communication sécurisé.

Bien qu'une transmission sans fil du produit 2 vers le dispositif 1 puisse être envisagée, voire est prévue dans la construction initiale du produit 2, lorsque le produit 2 est communiquant, il est préféré que le ou chaque produit intègre alors, avantageusement dans sa construction initiale, un étage ou une interface de sortie 8 relié(e) à une interface ou à un étage d'entrée 9 du dispositif 1, autorisant une transmission filaire de données du ou des produits 2 vers le dispositif 1, sous forme de signaux binaires ou analogiques. Le produit 2 pourra alors également intégrer un module de régulation de tension 16.

En accord avec une première variante constructive, représentée figure 1, le dispositif 1 est un dispositif autonome, éventuellement portable, intégrant également une unité de gestion et de traitement de l'information 10 et une interface utilisateur bidirectionnelle 11, ainsi qu'éventuellement un module de régulation de la tension 16 (par exemple un convertisseur DC/DC).

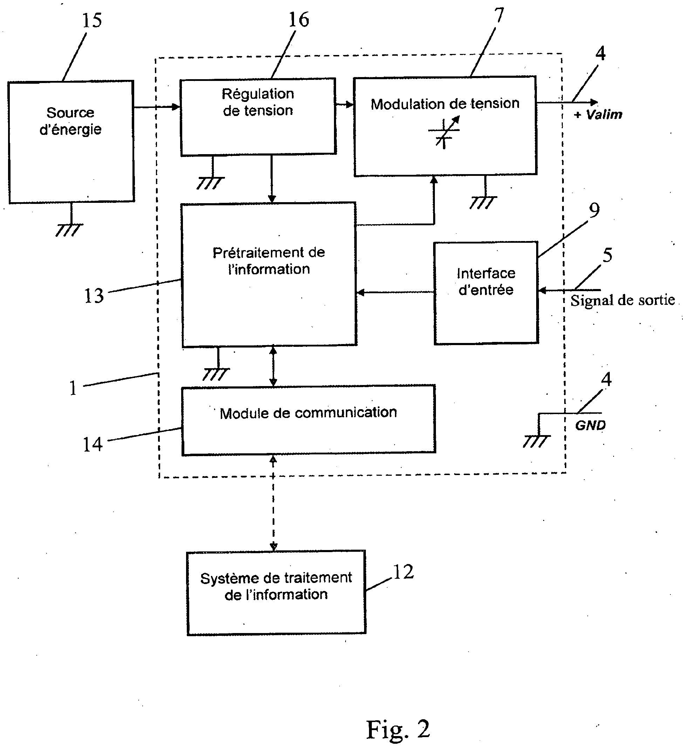

En accord avec une seconde variante constructive, représentée figure 2, le dispositif est un dispositif dépendant, accessoire d'un système de traitement informatique 12, intégrant une unité de prétraitement 13 et un module 14 de communication filaire ou sans fil avec le système 12 (une source 15 et un module 16 peuvent également être prévus).

Le produit 2 quant à lui consiste, par exemple, en un produit intelligent du type capteurs, détecteurs, pré-actionneurs ou actionneurs intelligents, intégrant au moins une unité de traitement 3 et un moyen de démodulation de tension 7, ainsi qu'au moins un autre élément fonctionnel 6, ledit produit 2 étant apte à être mis en oeuvre dans le cadre du procédé selon l'une quelconque des revendications 1 à 7, à des fins de configuration et/ou d'interrogation, et à faire partie du système tel que décrit ci-dessus.

Préférentiellement, le produit 2 est un capteur ou un détecteur filaire intelligent.

Dans ce qui suit, l'invention sera décrite de manière plus détaillée, mais non limitative, en relation avec les dessins annexés.

L'invention part du constat que tout produit 2 alimenté par une source externe, dispose d'une plage d'alimentation et d'au minimum deux fils (ou broches) dédiés à son alimentation (ligne d'alimentation 4 constituée des fils + Valim et GND).

En modulant (à l'intérieur d'une plage de fonctionnement qui lui est compatible) l'amplitude de la tension d'alimentation d'un produit 2 alimenté par une source externe, il est à la fois possible d'alimenter correctement ce produit 2 et de lui transmettre simultanément des données utiles à des fins de calibration, diagnostic, configuration ou d'interrogation.

De même et dès lors que le produit 2 de type configurable et/ou interrogeable dispose d'au moins une sortie 5 (tout ou rien ou analogique), gérée directement ou indirectement par une unité 3 de traitement de information (MCU, ASIC, ASSP,.), il est possible en retour, de recevoir (si nécessaire) de ce produit 2 tout type d'informations qui y seraient stockées.

Ce mode de communication basé sur l'alimentation et renvoi simultané de données, sans pour cela faire appel à des lignes de données spécifiques ou à un connecteur dédié, est particulièrement appropriée à la réalisation de produits 2 tels que des détecteurs de proximité (paramétrables ou non). En effet, ce type de produit dispose actuellement la plupart du temps de tous les éléments requis pour assurer une communication selon le principe précité, et donc d'une fonctionnalité ouverte vers l'extérieur à des fins de calibration, diagnostic, configuration ou d'interrogation.

Bien entendu, de nombreux autres types de produits disposant d'une ligne d'alimentation 4 à courant continu et d'une unité 3 de traitement de information peuvent avantageusement exploiter le procédé selon l'invention.

Comme l'illustrent en association les figures 1 et 2, le système présente deux composantes, à savoir un dispositif 1 de configuration et/ou d'interrogation et au moins un produit 2 configurable et/ou intenogeable (la description qui suit se base sur l'exemple avec un seul produit 2).

Le dispositif 1 de configuration et/ou d'interrogation transmet au produit 2 relié l'énergie et les signaux utiles à renvoi de messages.

Le dispositif 1 de configuration et/ou d'interrogation assure également le traitement des messages en provenance du produit 2 interrogé, lorsque ce dernier en émet et est équipé des moyens adéquats (sortie 5 / interface 8).

Le dispositif 1 de configuration et/ou d'interrogation peut se présenter sous deux variantes de réalisation, à savoir :
- un dispositif 1 autonome, par exemple sous la forme d'un boîtier alimenté par une source d'alimentation 15 externe ou embarquée (pile, batterie,...), affichant tout ou partie des informations utiles à des fins de calibration, diagnostic, configuration ou d'interrogation (Figure 1A);
- un dispositif 1 sous la forme d'un équipement accessoire et dépendant, par exemple sous la forme d'une interface associée, via une liaison appropriée (filaire ou non), à un système doté dune capacité de traitement de l'information (PC, tablette,.), le tout formant un ensemble utile à des fins de calibration, diagnostic, configuration ou d'interrogation. L'interface 1 peut alors être alimentée par une source d'alimentation externe ou embarquée (pile, batterie,...).

Il convient de noter également qu'en étant directement relié au produit 2, le dispositif 1 ou l'ensemble 1, 15 de configuration peut également être utilisé pour effectuer des tests fonctionnels de produits 2 configurables ou pas, dès lors que ces derniers disposent de caractéristiques électriques similaires (gamme de tension, consommation, type de sortie,.).

Des mesures (consommation, contrôle du type de sortie, commutation des sorties,...) peuvent ainsi être réalisées par le dispositif 1 de configuration et/ou d'interrogation qui devient, dans ces circonstances, un dispositif 1 de test du produit 2 raccordé.

Concernant plus particulièrement le principe de fonctionnement du procédé selon l'invention, il est prévu que les messages soient transmis au produit 2 sous forme sérielle asynchrone, par le biais dune modulation de la tension d'alimentation fournie au produit 2.

De ce fait, tout en reposant sur un mode de communication filaire, aucune ligne propre à la communication n'est nécessaire, étant donné que seule la ligne d'alimentation 4 existante du produit 2 est utilisée pour lui transmettre des informations.

Pour entrer en contact avec un produit 2, le dispositif 1 de configuration et/ou d'interrogation dispose d'un module de gestion d'alimentation dont il peut moduler l'amplitude.

Le produit 2 raccordé au dispositif 1 est dans un premier temps mis sous tension par ce dernier. Puis, après écoulement d'un laps de temps nécessaire à l'initialisation de l'unité de traitement de l'information (MCU, ASIC, ASSP,.) intégré au produit 2, le dispositif 1 de configuration et/ou d'interrogation, va chercher à communiquer des données au produit 2, en modulant la tension d'alimentation, dans un intervalle de tension compatible avec ce produit.

A partir de cet instant et dès lors que le produit 2 est configurable, il peut intercepter et prendre en compte les données transmises, voire même répondre à son tour au dispositif 1 de configuration et/ou d'interrogation, dès lors qu'il dispose dune sortie 5, 8 (tout ou rien ou analogique), afin de retourner des informations (données, acquittement,.), en modifiant l'état de sa sortie.

Dans le cas où le produit 2 configurable ne dispose pas d'une sortie 5, 8, l'utilisateur peut constater de lui même la prise en compte de consignes, par le biais de changements fonctionnels du produit configuré (modification des caractéristiques du produit, DEL d'état,.).

L'accès au produit 2 peut être effectué par le biais de messages codés (mot clés), qui assurent la sécurité de la communication.

Concernant le produit configurable et/ou interrogeable 2, ce dernier est capable d'interpréter les signaux (données) issus de la modulation d'amplitude de la tension d'alimentation, dans le but d'être configuré et/ou interrogé.

Dans le cas où une réponse est à fournir (transmissions d'informations et/ou implémentation d'un acquittement), le produit 2 configurable répond au dispositif 1 de configuration et/ou d'interrogation, préférentiellement par voie filaire (sérielle asynchrone), en faisant appel à sa ou à une de ses sorties 5 (tout ou rien ou analogique).

Le principe de fonctionnement du produit 2 est comme suit par exemple :
Si dans un laps de temps qui suit sa mise sous tension, le produit 2 configurable et/ou interrogeable ne reçoit pas de message via des fluctuations de tension opérées par le dispositif 1 de configuration et/ou d'interrogation sur la ligne d'alimentation 4, la fonction de scrutation de message du produit configurable 2 est interrompue et l'unité de traitement de l'information 3 (MCU, ASIC, ASSP,.) contenu dans le produit 2 se consacre exclusivement à la tâche principale du produit.

Cette disposition évite par la suite d'interpréter des signaux qui pourraient provenir non pas d'un dispositif de configuration et/ou d'interrogation, mais de fluctuations de l'alimentation (perturbations, chute de tension,.)

A l'inverse, peu de temps après avoir été mis sous tension, si un dispositif 1 de configuration et/ou d'interrogation est associé à un produit configurable 2, une demande d'entrée en communication (envoi d'un mot clé), parviendra au produit configurable 2 peu de temps après son initialisation et ce produit configurable 2 consacrera alors tout le temps nécessaire à ce cycle de calibration, diagnostic, configuration ou d'interrogation.

La fonction de scrutation de la tension d'alimentation (démodulation de tension) est obtenue à raide d'un simple comparateur de tension 7, qui selon que le niveau de tension présent sur la ligne d'alimentation 4 est supérieur ou inférieure à une tension de référence (Vref), convertis sous forme binaire le niveau (amplitude) de tension perçue, pour en communiquer l'état à l'unité 3 de traitement de l'information (MCU, ASIC, ASSP,.)

Pour réaliser la fonction de scrutation (démodulation) de la tension d'alimentation et à moins que la plage de tension d'alimentation admissible du produit ne soit très restreinte, un simple transistor, correctement polarisé, peut convenir. Un tel choix contribue alors à l'aspect économique et au faible encombrement de la solution.

Dans le cas où la plage de tension admissible du produit 2 est très restreinte, un comparateur de tension 7 peut être mis en oeuvre pour démoduler avec la précision requise le niveau de tension (amplitude), avant de le communiquer à l'unité 1 de traitement de l'information (MCU, ASIC, ASSP,.).

Un exemple du principe de communication qui s'opère entre le dispositif de configuration et le produit configurable est détaillé dans les logigrammes ainsi que dans le chronogramme ci joint.

Parmi les principaux avantages découlant de l'invention, en relation avec les variantes et les caractéristiques mises en oeuvre, on peut relever en particulier :
- un coût de revient très faible :
   L'interprétation des signaux issus de la modulation d'amplitude de la tension d'alimentation est obtenue de manière simple, via des composants très économiques (transistor ou comparateur).

La majorité des composants implémentant ce mode de communication est contenue dans le dispositif 1 de configuration et/ou de paramétrage et non dans le produit 2.

De plus aucun moyen de raccordement particulier (connecteur, câble ou dispositif de communication sans fil) n'est nécessaire au niveau du produit 2.
- la conservation de l'aspect initial du produit 2 :
   L'apport d'un tel principe de communication, ne modifie ni la forme, ni l'aspect extérieur du produit 2.

En effet, aucun connecteur ou câble supplémentaire n'est nécessaire. De même qu'aucun dispositif de communication sans fil (Optique, Radio, RFID, couplage magnétique, .)n'est utilisé.
- la compacité :
   Très peu de composants et donc très peu de place additionnelle sont nécessaires à un produit 2 doté d'un tel mode de communication.
- l'accessibilité :
   La communication peut s'effectuer à distance y compris sur une installation existante et sans avoir physiquement accès au produit 2, contrairement à bon nombre de produits faisant appel à un mode communication sans fil (Optique, Radio, RFID, couplage magnétique,.), qui nécessitent souvent d'être à proximité ou en visuel afin de communiquer de façon fiable avec le produit 2.
- la distance de communication relativement élevée :
   En fonction des caractéristiques du produit 2 (plage de tension d'alimentation, courant consommé, impédance) et du câble 4 utilisé pour alimenter le produit 2 (essentiellement résistance et capacité), il est possible d'exploiter la modulation d'amplitude de la tension d'alimentation, pour communiquer à plusieurs dizaines, voire plusieurs centaines de mètres.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de communication temporaire entre un dispositif de configuration, d'interrogation et/ou de diagnostic qui est maître durant la durée de communication et un produit intelligent, configurable et/ou interchangeable, du type actionneur, pré-actionneur, capteur ou détecteur qui est esclave durant la durée de la communication,
ledit produit (2) comportant au moins une unité de traitement (3), une ligne ou entrée d'alimentation (4) à courant continu et au moins une ligne de sortie et/ou interface de sortie (5),
ledit produit (2) étant relié, en fonctionnement courant dans son application usuelle, à au moins un système (1') d'alimentation et d'évaluation par sa ligne ou entrée d'alimentation (4) et par sa ligne ou interface de sortie (5),
procédé **caractérisé en ce qu'**il consiste, le produit (2) étant indépendant du dispositif (1) en fonctionnement courant, à le relier en tant que produit (2) esclave au dispositif (1) maître, **alors que** le produit (2) **est déconnecté** du système (1'), puis en vue d'une configuration, d'une calibration, d'un paramétrage, d'une interrogation ou encore d'un test ou d'un diagnostic, à transmettre au produit (2) des données interprétables par son unité de traitement (3) par l'intermédiaire de la ligne d'alimentation (4), en réalisant une modulation de la tension d'alimentation, et à transmettre des données en retour du produit (2) vers le dispositif (1) par l'intermédiaire de la ligne de sortie ou interface de sortie (5) reliée audit dispositif (1).

2. Procédé selon la revendication 1, **caractérisé en ce que** les données sont transmises sous forme sérielle asynchrone et **en ce que** la modulation de la tension est réalisée dans une plage de valeurs déterminée, compatible avec une alimentation satisfaisante du produit (2).

3. Procédé selon l'une quelconque des revendications 1 et 2, **caractérisé en ce que** les données transmises par la ligne d'alimentation (4) consistent en un message de configuration ou de paramétrage d'au moins une fonction et/ou d'au moins un élément fonctionnel (6) du produit (2).

4. Procédé selon l'une quelconque des revendications 1 et 2, **caractérisé en ce que** les données transmises par la ligne d'alimentation (4) consistent en un message d'interrogation, entraînant une transmission de données en retour du produit (2) vers le dispositif (1) par l'intermédiaire de la ligne de sortie ou interface de sortie (5) reliée audit dispositif (1), lesdites données transmises en retour étant, le cas échéant, des données stockées au niveau de l'unité de traitement (3) ou d'un circuit de stockage annexe de ce dernier et/ou résultant d'opérations effectuées par l'unité de traitement (3) par un ou plusieurs autre(s) élément(s) fonctionnel(s) (6) du produit, sous le contrôle de cette dernière.

5. Procédé selon l'une quelconque des revendications 1 et 2, **caractérisé en ce que** les données transmises par la ligne d'alimentation (4) consistent en un message de demande de test ou de diagnostic, entraînant une transmission de données en retour du produit (2) vers le dispositif (1) par l'intermédiaire de la ligne de sortie ou interface de sortie (5) reliée audit dispositif (1), lesdites données transmises en retour étant, le cas échéant, des données stockées au niveau de l'unité de traitement (3) ou d'un circuit de stockage annexe de ce dernier et/ou résultant d'opérations effectuées par l'unité de traitement (3) par un ou plusieurs autre(s) élément(s) fonctionnel(s) (6) du produit, sous le contrôle de cette dernière.

6. Procédé selon l'une quelconque des revendications 1 à 5, **caractérisé en ce qu'**il consiste à réaliser une scrutation de la tension d'alimentation, le cas échéant après écoulement d'une durée déterminée initiale de stabilisation, par l'intermédiaire d'un comparateur de tension (7) ou d'un transistor polarisé apte à convertir le niveau de la tension d'alimentation en signal binaire et à le transmettre à l'unité de traitement (3).

7. Procédé selon l'une quelconque des revendications 1 à 6, **caractérisé en ce qu'**il met en oeuvre un protocole de communication sécurisé, mettant en oeuvre un codage des données et/ou des messages transmis et/ou validant une transmission autorisée après réception d'un message de demande d'entrée ou de début de communication par le produit (2) caractéristique, éventuellement codé, et, le cas échéant, jusqu'à réception d'un message d'arrêt ou de fin de communication par ce produit (2).

8. Procédé de fonctionnement d'un produit intelligent du type actionneur, pré-actionneur, capteur ou détecteur relié, en fonctionnement courant dans son application usuelle, à au moins un système d'alimentation et d'évaluation, par une ligne ou entrée d'alimentation et par une ligne ou interface de sortie,
procédé **caractérisé en ce qu'**il consiste, durant des phases temporaires spécifiques de configuration, de calibration, de paramétrage, d'interrogation, de test, de diagnostic ou analogue, à connecter temporairement ledit produit (2) à un dispositif (1) de configuration, d'interrogation et/ou de diagnostic par sa ligne ou entrée d'alimentation (4) et par sa ligne ou interface de sortie (5), après avoir déconnecté ledit produit (2) du système (1') précité, et à mettre en oeuvre le procédé de communication selon l'une quelconque des revendications 1 à 7.

9. Système pour la mise en oeuvre du procédé de communication temporaire selon l'une quelconque des revendications 1 à 7, comprenant un dispositif de configuration et/ou interrogation et au moins un produit configurable et/ou interrogeable, respectivement maître et esclave durant la communication,
le ou chaque produit (2) consistant en un produit intelligent choisi dans le groupe formé par les actionneurs, les pré-actionneurs, les capteurs et les détecteurs intelligents et étant apte à être relié de manière courante à un système (1') d'alimentation et d'évaluation et temporairement audit dispositif (1), ce par l'intermédiaire de sa ligne d'alimentation (4) à courant continu, ainsi que par sa ligne ou son interface (5) de sortie,
ledit au moins un produit (2) comprenant au moins une unité de traitement (5), et préférentiellement au moins un autre élément ou composant fonctionnel,
le dispositif (1) et le ou chaque produit (2) comprenant des moyens respectifs (7, 7'), fonctionnellement complémentaires, pour la transmission du dispositif (1) vers le ou chaque produit (2) de données interprétables par l'unité de traitement (3) concernée, ladite transmission s'effectuant par l'intermédiaire de la ligne d'alimentation (4) et par le biais d'une modulation de la tension d'alimentation et le ou chaque produit (2) intégrant un étage ou une interface de sortie (8) relié(e) à une interface ou à un étage d'entrée (9) du dispositif (1), autorisant une transmission filaire de données du ou des produits (2) vers le dispositif (1), sous forme de signaux binaires ou analogiques.

10. Système selon la revendication 9, **caractérisé en ce que** le dispositif (1) comporte un composant ou circuit (7') de modulation de la tension, dans une plage de valeurs déterminée, compatible avec une alimentation satisfaisante du ou des produits (2) connecté(s), et **en ce que** le ou chaque produit (2) comporte un circuit ou composant (7) de démodulation de tension, tel que par exemple un comparateur de tension, dont la sortie est reliée à l'unité de traitement (3) du produit (2) concerné, la transmission de données s'effectuant sous forme sérielle asynchrone, le cas échéant avec mise en oeuvre d'un protocole de communication sécurisé.

11. Système selon l'une quelconque des revendications 9 et 10, **caractérisé en ce que** le dispositif (1) est un dispositif autonome, éventuellement portable, intégrant également une unité de gestion et de traitement de l'information (10) et une interface utilisateur bidirectionnelle (11).

12. Système selon l'une quelconque des revendications 9 à 11, **caractérisé en ce que** le dispositif (1) est un dispositif dépendant, accessoire d'un système de traitement informatique (12), intégrant une unité dé prétraitement (13) et un module (14) de communication filaire ou sans fil avec le système (12).

13. Produit intelligent, configurable et/ou interrogeable, du type capteur, détecteur ou actionneur, intégrant au moins, une unité de traitement (3) et un moyen de démodulation de tension (7), ainsi qu'au moins un autre élément fonctionnel (6), ledit produit (2) étant apte à être mis en oeuvre dans le cadre du procédé selon l'une quelconque des revendications 1 à 7, à des fins de configuration et/ou d'interrogation, et à faire partie du système selon l'une quelconque des revendications 9 à 12.

## Patentansprüche

1. Verfahren für eine zeitweilige Kommunikation zwischen einer Vorrichtung zur Konfiguration, Abfrage und/oder Diagnose, die für die Dauer der Kommunikation Master ist, und einer konfigurierbaren und/oder austauschbaren intelligenten Einrichtung der Art eines Aktors, Voraktors, Sensors oder Detektors, die für die Dauer der Kommunikation Slave ist,
wobei die genannte Einrichtung (2) mindestens eine Verarbeitungseinheit (3), eine Gleichstromversorgungsleitung oder -eingang (4) und mindestens eine Ausgangsleitung und/oder Ausgangsschnittstelle (5) aufweist,
wobei die genannte Einrichtung (2) im Normalbetrieb in ihrer üblichen Anwendung über ihre Versorgungsleitung oder -eingang (4) und ihre Ausgangsleitung und/oder -schnittstelle (5) mit mindestens einem Versorgungs- und Auswertungssystem (1') verbunden ist,
Verfahren, **dadurch gekennzeichnet, dass** es darin besteht, die Einrichtung (2), da sie im Normalbetrieb von der Vorrichtung (1) unabgängig ist, als Sklaven-Einrichtung mit der Master-Vorrichtung (1) zu verbinden, während die Einrichtung (2) vom System (1') getrennt ist, und dann für eine Konfiguration, Kalibrierung, Parametrierung, eine Abfrage oder auch einen Test oder eine Diagnose zur Einrichtung (2) von ihrer Verarbeitungseinheit (3) auswertbare Daten über die Versorgungsleitung (4) zu übertragen, indem eine Modulation der Versorgungsspannung vorgenommen wird, und in Antwort darauf über die Ausgangsleitung oder Ausgangsschnittstelle (5), die mit der Vorrichtung (1) verbunden ist, Daten von der Einrichtung (2) zur Vorrichtung (1) zu übertragen.

2. Verfahren nach Patentanspruch 1, **dadurch gekennzeichnet, dass** die Daten seriell asynchron übertragen werden und dadurch, dass die Modulation der Spannung in einer festgelegten Wertespanne erfolgt, die mit einer ausreichenden Versorgung der Einrichtung (2) verträglich ist.

3. Verfahren nach irgendeinem der Patentansprüche 1 und 2, **dadurch gekennzeichnet, dass** die über die Versorgungsleitung (4) übertragenen Daten in einer Konfigurations- oder Parametrierungsmeldung mindestens einer Funktion und/oder mindestens eines Funktionsteils (6) der Einrichtung (2) bestehen.

4. Verfahren nach irgendeinem der Patentansprüche 1 und 2, **dadurch gekennzeichnet, dass** die über die Versorgungsleitung (4) übertragenen Daten in einer Abfragemeldung bestehen, die zu einer Übertragung von Antwortdaten von der Einrichtung (2) zur Vorrichtung (1) über die Ausgangsleitung oder Ausgangsschnittstelle (5), die an die genannte Vorrichtung (1) angeschlossen ist, führt, wobei die genannten in Antwort übertragenen Daten gegebenenfalls Daten sind, die im Bereich der Verarbeitungseinheit (3) oder einer ihr zugehörigen Speicherschaltung gespeichert sind, und/oder aus Verarbeitungsschritten stammen, die von der Verarbeitungseinheit (3), durch ein oder mehrere andere Funktionsteile (6) der Einrichtung unter Steuerung durch diese letztgenannte ausgeführt wurden.

5. Verfahren nach irgendeinem der Patentansprüche 1 und 2, **dadurch gekennzeichnet, dass** die über die Versorgungsleitung (4) übertragenen Daten in einer Test- oder Diagnoseanforderungsmeldung bestehen, die zu einer Übertragung von Antwortdaten von der Einrichtung (2) zur Vorrichtung (1) über die Ausgangsleitung oder Ausgangsschnittstelle (5), die an die genannte Vorrichtung (1) angeschlossen ist, führt, wobei die genannten in Antwort übertragenen Daten gegebenenfalls Daten sind, die im Bereich der Verarbeitungseinheit (3) oder einer ihr zugehörigen Speicherschaltung gespeichert sind, und/oder aus Verarbeitungsschritten stammen, die von der Verarbeitungseinheit (3) durch ein oder mehrere andere Funktionsteile (6) der Einrichtung unter Steuerung durch diese letztgenannte ausgeführt wurden.

6. Verfahren nach irgendeinem der Patentansprüche 1 bis 5, **dadurch gekennzeichnet, dass** es darin besteht, gegebenenfalls nach Ablauf einer festgelegten Einschaltstabilisierungszeit, mit Hilfe eines Spannungsvergleichers (7) oder eines polarisierten Transistors eine Abtastung der Versorgungsspannung vorzunehmen, der geeignet ist, die Höhe der Versorgungsspannung in ein binäres Signal umzusetzen, und es an die Verarbeitungseinheit (3) zu übertragen.

7. Verfahren nach irgendeinem der Patentansprüche 1 bis 6, **dadurch gekennzeichnet, dass** es ein gesichertes Kommunikationsprotokoll anwendet, das eine Verschlüsselung der übertragenen Daten und/oder Meldungen anwendet und/oder eine autorisierte Übertragung nach Empfang einer spezifischen, gegebenenfalls verschlüsselten Zugangsanforderungs- oder Kommunikationsbeginnmeldung durch die Einrichtung (2) zulässt, und zwar gegebenenfalls bis zum Empfang einer Kommunikationsabbruchs- oder - endemeldung durch diese Einrichtung (2).

8. Verfahren zum Betrieb einer intelligenten Einrichtung der Art eines Aktors, Voraktors, Sensors oder Detektors, die im Normalbetrieb in ihrer üblichen Anwendung über ihre Versorgungsleitung oder -eingang und über eine Ausgangsleitung und/oder -schnittstelle mit mindestens einem Versorgungs- und Auswertungssystem (1') verbunden ist,
Verfahren, **dadurch gekennzeichnet, dass** es darin besteht, während zeitweiliger, spezifischer Konfigurations-, Kalibrierungs-, Parametrierungs-, Abfrage-, Test-, Diagnosephasen oder Ähnlichem die genannte Einrichtung (2) über ihre Versorgungsleitung oder -schnittstelle (4) und ihre Ausgangsleitung oder -schnittstelle (5) mit einer Vorrichtung (1) zur Konfiguration, Abfrage und/oder Diagnose zu verbinden, nachdem die genannte Einrichtung (2) vom oben erwähnten System (1') getrennt wurde, und das Kommunikationssystem nach irgendeinem der Patentansprüche 1 bis 7 auszuführen.

9. System zur Ausführung des zeitweiligen Kommunikationssystems nach irgendeinem der Patentansprüche 1 bis 7, eine Konfigurations- und/oder Abfragevorrichtung und mindestens eine konfigurierbare und/oder abfragbare Einheit aufweisend, die während der Kommunikation Master bzw. Slave sind,
wobei die oder jede Einrichtung (2) in einer intelligenten Einrichtung, ausgewählt aus der Gruppe, gebildet durch die intelligenten Aktoren, Voraktoren, Sensoren und Detektoren, besteht und in der Lage ist, im Normalbetrieb über ihre Gleichspannungsversorgungsleitung (4), sowie ihre Ausgangsleitung und/oder Ausgangsschnittstelle (5) mit mindestens einem Versorgungs- und Auswertungssystem (1') und zeitweilig mit der genannten Vorrichtung (1) verbunden zu werden,
wobei die genannte mindestens eine Einrichtung (2) mindestens eine Verarbeitungseinheit (5) umfasst und vorzugsweise mindestens ein anderes Funktionsteil oder -komponente,
wobei die Vorrichtung (1) und die oder jede Einrichtung (2) jeweils Mittel (7, 7') mit sich ergänzender Funktionsweise zur Übertragung von durch die betroffene Verarbeitungseinheit (3) auswertbaren Daten von der Vorrichtung (1) zu der oder jeder Einrichtung (2) umfassen, wobei die genannte Übertragung über die Versorgungsleitung (4) durch eine Modulation der Versorgungsspannung erfolgt, und die oder jede Einrichtung (2) eine Ausgangsstufe oder -schnittstelle (8) umfasst, die an eine Eingangsschnittstelle oder -stufe (9) der Vorrichtung (1) angeschlossen ist, die eine Drahtdatenübertragung von der oder den Einrichtung(en) (2) zur Vorrichtung (1) in Form binärer oder analoger Signale erlaubt.

10. System nach Patentanspruch 9, **dadurch gekennzeichnet, dass** die Vorrichtung (1) eine Komponente oder Schaltung (7') zur Spannungsmodulation in einer festgelegten Wertespanne aufweist, die mit einer ausreichenden Versorgung der angeschlossenen Einrichtung(en) (2) verträglich ist, und dadurch, dass die oder jede Einrichtung (2) eine Schaltung oder Komponente (7) zur Spannungsdemodulation, wie etwa einen Spannungsvergleicher, aufweist, deren Ausgang mit der Verarbeitungseinheit (3) der betroffenen Einrichtung (2) verbunden ist, wobei die Datenübertragung seriell asynchron erfolgt, gegebenenfalls unter Anwendung eines gesicherten Kommunikationsprotokolls.

11. System nach irgendeinem der Patentansprüche 9 und 10, **dadurch gekennzeichnet, dass** die Vorrichtung (1) eine unabhängige, eventuell tragbare, Vorrichtung ist, die auch eine Datenverwaltungs- und -verarbeitungseinheit (10) und eine bidirektionale Benutzerschnittstelle (11) umfasst.

12. System nach irgendeinem der Patentansprüche 9 bis 11, **dadurch gekennzeichnet, dass** die Vorrichtung (1) eine abhängige Vorrichtung ist, die Zubehör eines Datenverarbeitungssystems (12) ist, das eine Vorverarbeitungseinheit (13) und ein Modul (14) zur Draht- oder drahtlosen Kommunikation mit dem System (12) aufweist.

13. Intelligente Einrichtung, konfigurierbar und/oder abfragbar, der Art eines Sensors, Detektors oder Aktors, der mindestens eine Verarbeitungseinheit (3) und ein Spannungsdemodulationsmittel (7) aufweist, sowie mindestens ein anderes Funktionsteil (6), wobei die genannte Einrichtung (2) geeignet ist, im Rahmen des Verfahrens nach irgendeinem der Patentansprüche 1 bis 7 zur Konfiguration und/oder Abfrage verwendet zu werden, und Teil des Systems nach irgendeinem der Patentansprüche 9 bis 12 zu sein.

## Claims

1. Method for temporary communication between a device for configuration, interrogation and/or diagnosis that is a master unit for the period of the communication and a smart, configurable and/or interchangeable product such as an actuator, pre-actuator, sensor or detector that is a slave unit for the period of the communication,
with said product (2) comprising at least one processing unit (3), a direct current power supply input or power supply line (4), and at least one output line and/or output interface (5),
with said product (2) being connected, in running operation in its usual application, to at least one evaluation and power supply system (1') by its power supply input or power supply line (4) and by its output interface or output line (5),
method **characterised in that** it consists, the product (2) being independent of the device (1) in running operation, in connecting it as a slave product (2) to the master device (1), while the product (2) is disconnected from the system (1'), and then for the purpose of a configuration, a calibration, a parameterization, an interrogation or else a test or a diagnosis, in transmitting to the product (2) data that can be interpreted by its processing unit (3) by means of the power supply line (4), by creating a modulation of the power supply voltage and in transmitting data back from the product (2) to the device (1) by means of the output line or output interface (5) connected to said device (1).

2. Method according to claim 1, **characterised in that** the data are transmitted in asynchronous serial form, and **in that** the modulation of the voltage is done within a specified range of values, compatible with a satisfactory supply of power of the product (2).

3. Method according to any of claims 1 and 2, **characterised in that** the data transmitted by the power supply line (4) consist of a message of configuration or parameterization of at least one function and/or at least one functional element (6) of the product (2).

4. Method according to any of claims 1 and 2, **characterised in that** the data transmitted by the power supply line (4) consist of a message of interrogation, causing a transmission of data back from the product (2) to the device (1) by means of the output line or output interface (5) connected to said device (1), with said data transmitted back being, if necessary, data stored in the processing unit (3) or an attached storage circuit of the latter and/or resulting from operations performed by the processing unit (3), by one or more other functional element(s) (6) of the product, under the control of the latter.

5. Method according to any of claims 1 and 2, **characterised in that** the data transmitted by the power supply line (4) consist of a message requesting a test or diagnosis, causing a transmission of data back from the product (2) to the device (1) by means of the output line or output interface (5) connected to said device (1), with said data transmitted back being, if necessary, data stored at the processing unit (3) or an attached storage circuit of the latter and/or resulting from operations carried out by the processing unit (3) by one or more other functional element(s) (6) of the product, under the control of the latter.

6. Method according to any of claims 1 to 5, **characterised in that** it consists in carrying out a scanning of the power supply voltage, if necessary after a specified initial period of stabilization has elapsed, by means of a voltage comparator (7) or a polarized transistor that can convert the level of the power supply voltage into a binary signal and that can transmit it to the processing unit (3).

7. Method according to any of claims 1 to 6, **characterised in that** it implements a secure communications protocol, implementing a coding of data and/or messages that are transmitted and/or validating an authorized transmission after the characteristic product (2) receives an optionally coded message requesting entering into or initiation of communication, and, if necessary, until an end of communication or stop message is received by this product (2).

8. Method for operation of a smart product of the actuator, pre-actuator, sensor or detector type that is connected, in running operation in its usual application, to at least one evaluation and power supply system, by a power supply input or power supply line and by an output interface or output line,
method **characterised in that** it consists, during specific temporary phases of configuration, calibration, parameterization, interrogation, testing, diagnosis, or the like, in temporarily connecting said product (2) to a device (1) for configuration, interrogation and/or diagnosis by its power supply input or power supply line (4) and by its output interface or output line (5), after having disconnected said product (2) from the above-mentioned system (1') and in implementing the communication method according to any of claims 1 to 7.

9. System for implementing the method of temporary communication according to any of claims 1 to 7, comprising a device for configuration and/or interrogation and at least one configurable and/or interrogatable product, respectively master and slave during the communication,
with the or each product (2) consisting of a smart product that is selected from the group that is formed by the actuators, the pre-actuators, the sensors and the detectors that are smart and being able to be connected continuously to an evaluation and power supply system (1') and temporarily to said device (1), by means of its direct current power supply line (4), as well as by its output interface or output line (5),
with said at least one product (2) comprising at least one processing unit (5), and preferably at least one other functional element or component,
with the device (1) and the or each product (2) comprising functionally complementary respective means (7, 7') for the transmission of the device (1) to the or each product (2) of data that can be interpreted by the processing unit (3) in question, said transmission being performed by means of the power supply line (4) and via a modulation of the power supply voltage and the or each product (2) integrating an output interface or output stage (8) connected to an input stage or input interface (9) of the device (1), allowing a wire transmission of data from the product or products (2) to the device (1), in the form of binary or analog signals.

10. System according to claim 9, **characterised in that** the device (1) comprises a voltage modulation circuit or component (7') in a specified range of values, compatible with a satisfactory power supply of the connected product or products (2), and **in that** the or each product (2) comprises a voltage demodulation component or circuit (7), such as, for example, a voltage comparator, whose output is connected to the processing unit (3) of the product (2) in question, with the data transmission being performed in asynchronous serial form, if necessary with implementation of a secure communications protocol.

11. System according to any of claims 9 and 10, **characterised in that** the device (1) is an optionally portable, autonomous device, also integrating a unit for management and processing of information (10) and a bidirectional user interface (11).

12. System according to any of claims 9 to 11, **characterised in that** the device (1) is a dependent device, accessory of a computer processing system (12), integrating a pretreatment unit (13) and a wireless or wired communications module (14) with the system (12).

13. Smart, configurable and/or interrogatable product of the sensor, detector or actuator type, integrating at least one processing unit (3) and a voltage demodulation means (7), as well as at least one other functional element (6), with said product (2) being able to be implemented within the framework of the method according to any of claims 1 to 7, for the purposes of configuration and/or interrogation, and for being part of the system according to any of claims 9 to 12.
